# EUROPEAN PATENT SPECIFICATION

(11) **EP 3 101 466 B1**
(45) Date of publication and mention of the grant of the patent: **06.03.2019**
(21) Application number: 16152022.6
(22) Date of filing: 20.01.2016
(51) Int. Cl.: G02F 1/1333, G02F 1/1335

(54) **DISPLAY DEVICE HAVING A BACKLIGHT UNIT WITH A FRAME STRUCTURE**
ANZEIGEVORRICHTUNG MIT EINER RÜCKBELEUCHTUNGSEINHEIT MIT EINER RAHMENSTRUKTUR
DISPOSITIF D'AFFICHAGE COMPRENANT UNE UNITÉ DE RÉTROÉCLAIRAGE AVEC UNE STRUCTURE DE CADRE

(30) Priority: 02.06.2015 KR 20150077722
(43) Date of publication of application: 07.12.2016
(73) Proprietor: LG Electronics Inc., Seoul 07336 (KR)
(72) Inventor: YEO, Simdong, 06772 Seoul (KR)
(74) Representative: Katérle, Axel

(56) References cited:
- EP-A1- 2 515 027
- WO-A1-2013/071628
- CN-U- 201 672 468
- CN-U- 201 757 332
- US-A1- 2013 070 170
- US-A1- 2015 029 710

## Description

### BACKGROUND OF THE DISCLOSURE

### Field of the Disclosure

The present invention relates to a display device.

### Background of the Disclosure

As information society has advanced, demand for display devices has increased in various forms, and in line with this, recently, various display devices, such as a liquid crystal display (LCD), a plasma display panel (PDP), an electroluminescent display (ELD), and a vacuum fluorescent display (VFD), and the like, have been studied and used.

A liquid crystal panel of an LCD, among the display devices, may include a liquid crystal layer and a thin film transistor (TFT) board and a color filter board facing each other with the liquid crystal layer interposed therebetween, and display an image using light provided from a backlight unit.

Patent application US 2015/0029710 A1 discloses a display device as specified in the preamble of appended claim 1 and which comprises a cover bottom which includes a plurality of LED frames with an LED array adhered thereto and a plurality of reinforcing frames coupled to the LED frames in a lattice type, and a display device using the same.

### SUMMARY OF THE DISCLOSURE

According to the present invention, a display device according to claim 1 is provided. Preferred embodiments of the display device are recited in the dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIGS. 1 and 2 are views illustrating a display device according to an embodiment of the present disclosure.
FIGS. 3 through 10 are views illustrating configurations of a display device related to the present disclosure.
FIGS. 11 through 30 are views illustrating a display device according to an embodiment of the present disclosure.

### DETAILED DESCRIPTION OF THE EMBODIMENTS

Reference will now be made in detail embodiments of the invention examples of which are illustrated in the accompanying drawings. Since the present invention may be modified in various ways and may have various forms, specific embodiments are illustrated in the drawings and are described in detail in the present specification. However, it should be understood that the present invention are not limited to specific disclosed embodiments, but include all modifications, equivalents and substitutes included within the spirit and technical scope of the present invention.

The terms 'first', 'second', etc. may be used to describe various components, but the components are not limited by such terms. The terms are used only for the purpose of distinguishing one component from other components. For example, a first component may be designated as a second component without departing from the scope of the present invention. In the same manner, the second component may be designated as the first component.

The term "and/or" encompasses both combinations of the plurality of related items disclosed and any item from among the plurality of related items disclosed.

When an arbitrary component is described as "being connected to "or" being linked to" another component, this should be understood to mean that still another component(s) may exist between them, although the arbitrary component may be directly connected to, or linked to, the second component. In contrast, when an arbitrary component is described as "being directly connected to" or "being directly linked to" another component, this should be understood to mean that no component exists between them.

The terms used in the present application are used to describe only specific embodiments or examples, and are not intended to limit the present invention. A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present invention pertains. The terms defined in a generally used dictionary must be understood to have meanings identical to those used in the context of a related art, and are not to be construed to have ideal or excessively formal meanings unless they are obviously specified in the present application.

The following exemplary embodiments of the present invention are provided to those skilled in the art in order to describe the present invention more completely. Accordingly, shapes and sizes of elements shown in the drawings may be exaggerated for clarity.

Hereinafter, a liquid crystal display (LCD) will be described as an example of a display device, but a person skilled in the art can recognize that a modified but similar set-up can also be used with a plasma display panel (PDP), a field emission display (FED), or an organic light emitting display device.

A display panel 110 may have a first longer side LS1, a second longer side LS2 opposing the first longer side LS1, a first shorter side SS1, and a second shorter side SS2 opposing the first shorter side SS1.

Here, the first shorter side SS1 may be referred to as a first side area, the second shorter side SS2 may be referred to as a second side area opposing the first side area, the first longer side LS1 may be referred to as a third side area adjacent to the first side area and the second side area and positioned between the first side area and the second side area, and the second longer side LS2 may be referred to as a fourth side area adjacent to the first side area and the second side area, positioned between the first side area and the second side area, and opposing the third side area.

Also, for the purposes of description, it is illustrated that lengths of first and second longer sides LS1 and LS2 are greater than those of the first and second shorter sides SS1 and SS2, but it may also be possible for the lengths of the first and second longer sides LS1 and LS2 to be substantially equal to those of the first and second shorter sides SS1 and SS2.

In addition, a first direction DR1 is a direction parallel to the first and second longer sides LS1 and LS2 of the display device 100, and a second direction DR2 may be a direction parallel to the first and second shorter sides SS1 and SS2 of the display device 100.

A third direction DR3 may be a direction perpendicular to the first direction DR1 and/or the second direction DR2.

The first direction DR1 and the second direction DR2 may be generally termed a horizontal direction.

The third direction DR3 may be termed a vertical direction.

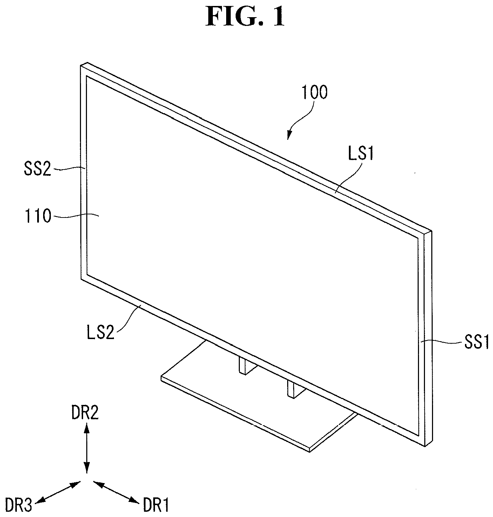

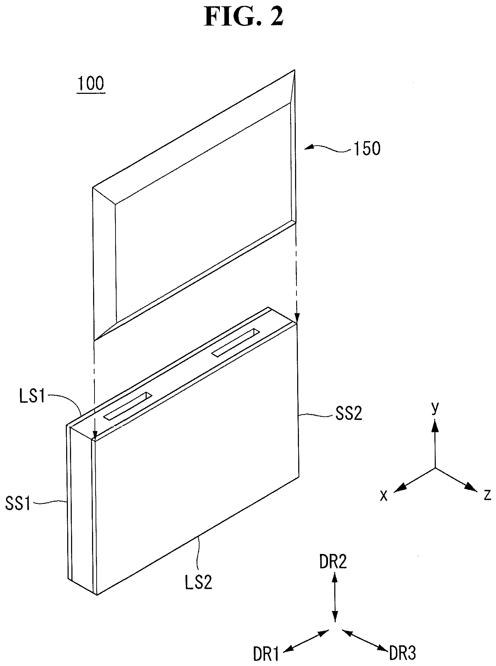

FIGS. 1 and 2 are views illustrating the display device according to an embodiment of the present disclosure.

As illustrated in FIGS. 1 and 2, the display device 100 may include a display panel 110 and a back cover 150 on the back of the display panel 110.

The back cover 150 may be connected to the display panel 110 in a sliding manner in a direction from the first longer side LS1 to the second longer side LS2, that is, in the second direction DR2. In other words, the back cover 150 may be inserted in a sliding manner from the first shorter side SS1 of the display panel 110, the second shorter side SS2 opposing the first shorter side SS1 and the first longer side LS1 adjacent to the first and second shorter sides SS1 and SS2 and positioned between the first shorter side SS1 and the second shorter side SS2.

In order to slidably connect the back cover 150 to the display panel 110, the back cover 150 and/or a structure adjacent thereto may include a protrusion portion, a sliding portion, and a coupling portion.

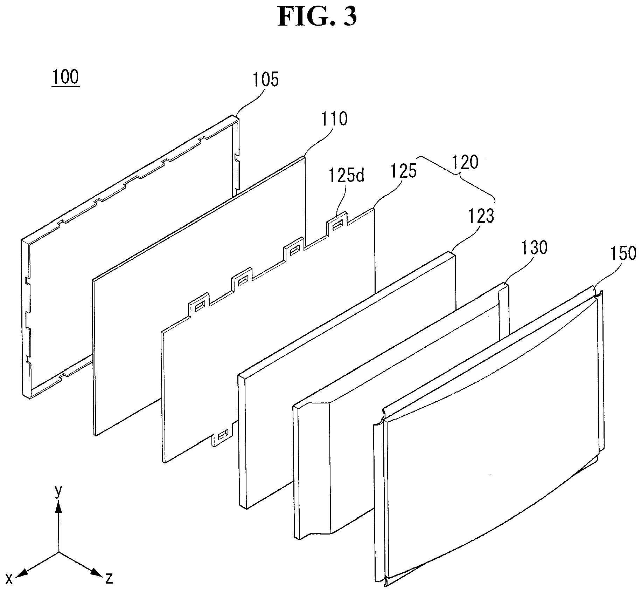

FIGS. 3 though 10 are views illustrating a configuration of a display device related to the present disclosure.

As illustrated in FIG. 3, the display device 100 according to an embodiment of the present disclosure may include a front cover 105, a display panel 110, a backlight unit 120, a frame 130, and a back cover 150.

The front cover 105 may cover at least a portion of one of a front surface and a side surface of the display panel 110. The front cover 105 may be a quadrangular frame shape with a hollow center. Since the center of the front cover is hollow, an image of the display panel 110 may be displayed outwardly.

The front cover 105 may be divided into a front surface cover and a side surface cover. That is, the front cover 105 may be divided into the front surface cover positioned on a front surface of the display panel 110 and the side surface cover positioned on the side surface of the display panel 110. The front surface cover and the side surface cover may be separately configured. Either the front surface cover or the side surface cover may be omitted. For example, for the purpose of a fine design, the front surface cover may not be present and only the side surface cover may be present.

The display panel 110 may be provided on a front side of the display device 100 and display an image. The display panel 110 may divide an image into a plurality of pixels and output an image according to a color, brightness, and chroma per pixel. The display panel 110 may be divided into an active area in which an image is displayed, and an inactive area in which an image is not displayed. The display panel 110 may include a front board and a rear board facing each other with a liquid crystal layer interposed therebetween.

The front board may include a plurality of pixels including red (R), green (G), and blue (B) subpixels. The front board may generate an image corresponding to a red, green, or blue color according to a control signal.

The rear board may include switching elements. The rear board may switch a pixel electrode. For example, the pixel electrode may change a molecular arrangement of the liquid crystal layer according to a control signal applied from the outside. The liquid crystal layer may include a plurality of liquid crystal molecules. The liquid crystal molecules may be changed in alignment to correspond to a voltage difference made generated between the pixel electrode and a common electrode. The liquid crystal layer may transmit light provided from the backlight unit 120 to the front board.

The backlight unit 120 may be positioned on a rear side of the display panel 110. The backlight unit 120 may include a plurality of light sources. The light source units of the backlight unit 120 may be disposed in a direct type or an edge type. When the backlight unit 120 is an edge type, the backlight unit 120 may further include a light guide panel.

The backlight unit 120 may be coupled to a front surface of the frame 130. For example, the plurality of light sources may be disposed on the front surface of the frame 140. For example, the plurality of light sources may be disposed on the front surface of the frame 130, and in this case, the backlight unit 120 may be termed a direct type backlight unit.

The backlight unit 120 may be driven according to the whole driving scheme or according to a partial driving scheme such as local dimming or impulsive scheme. The backlight unit 120 may include an optical sheet 125 and an optical layer 123.

The optical sheet 125 may serve to cause light from the light sources to be evenly transmitted to the display panel 110. The optical sheet 125 may include a plurality of layers. For example, the optical sheet 125 may include at least one prism sheet and/or at least one diffusion sheet.

The optical sheet 125 may have at least one coupling portion 125d. The coupling portion 125d may be coupled to the front cover 105 and/or the back cover 150. That is, the coupling portion 125d may be directly coupled to the front cover 105 and/or the back cover 150. Alternatively, the coupling portion 125d may also be coupled to a structure coupled to the front cover 105 and/or the back cover 150. That is, the coupling portion 125d may be indirectly coupled to the front cover 105 and/or the back cover 150.

The optical layer 123 may include a light source. A specific configuration of the optical layer 123 will be described in a pertinent part.

The frame 130 may serve to support a component of the display device 100. For example, a component of the backlight unit 120, or the like, may be coupled to the frame 130. The frame 130 may be formed of a metal such as an aluminum alloy.

The back cover 150 may be positioned on the rear surface of the display device 100. The back cover 150 may protect an internal component from the outside. At least a portion of the back cover 150 may be coupled to the frame 130 and/or the front cover 105. The back cover 150 may be an injection-molded product formed of a resin.

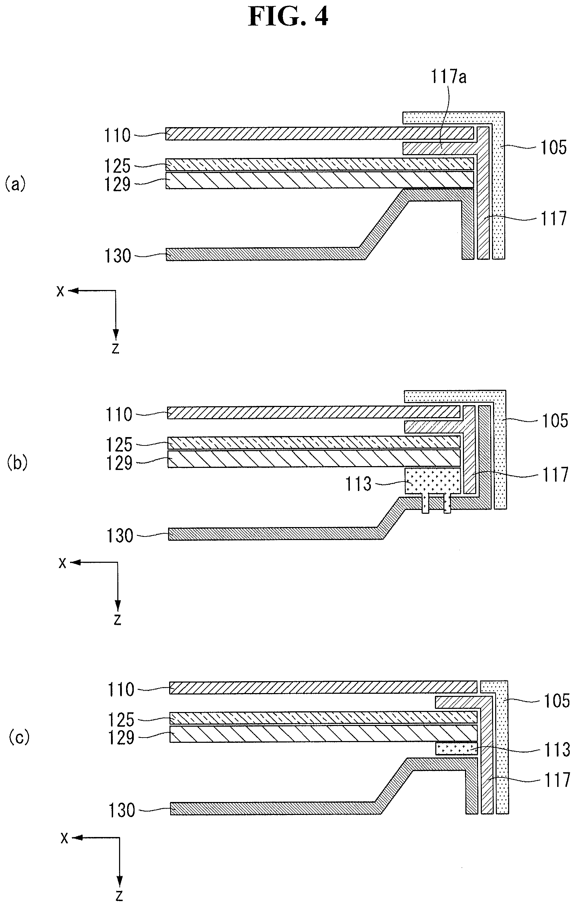

FIG. 4 is a view illustrating a configuration of the optical sheet 125, or the like.

As illustrated in (a) of FIG. 4, the optical sheet 125 and/or a diffusion plate 129 may be positioned above the frame 130. The optical sheet 125 and/or the diffusion plate 129 may be coupled to the frame at an edge of the frame 130. The optical sheet 125 and/or the diffusion plate 129 may be directly mounted on the edge of the frame 130. That is, an outer circumference of the optical sheet 125 and/or the diffusion plate 129 may be supported by the frame 130. An upper surface of the edge of the optical sheet 125 and/or the diffusion plate 129 may be covered by a first guide panel 117. For example, the optical sheet 125 and/or the diffusion plate 129 may be positioned between the edge of the frame 130 and a flange 117a of the first guide panel 117.

The display panel 110 may be positioned on a front side of the optical sheet 125. An edge of the display panel 110 may be coupled to the first guide panel 117. That is, the display panel 110 may be supported by the first guide panel 117.

An edge area of a front surface of the display panel 110 may be covered by the front cover 105. For example, the display panel 110 may be positioned between the first guide panel 117 and the front cover 105.

As illustrated in (b) of FIG. 4, the display device 100 according to an embodiment of the present disclosure may further include a second guide panel 113. The optical sheet 125 and/or the diffusion plate 129 may be coupled to the second guide panel 113. That is, the second guide panel 113 may be coupled to the frame 130, and the optical sheet 125 and/or the diffusion plate 129 may be coupled to the second guide panel 113. The second guide panel 113 may be formed of a material different from that of the frame 130. The frame 130 may be configured to cover the first and second guide panels 117 and 113.

As illustrated in (c) of FIG. 4, in the display device 100 according to an embodiment of the present disclosure, the front cover 105 may not cover a front surface of the display panel 110. That is, one end of the front cover 105 may be positioned on a side surface of the display panel 110.

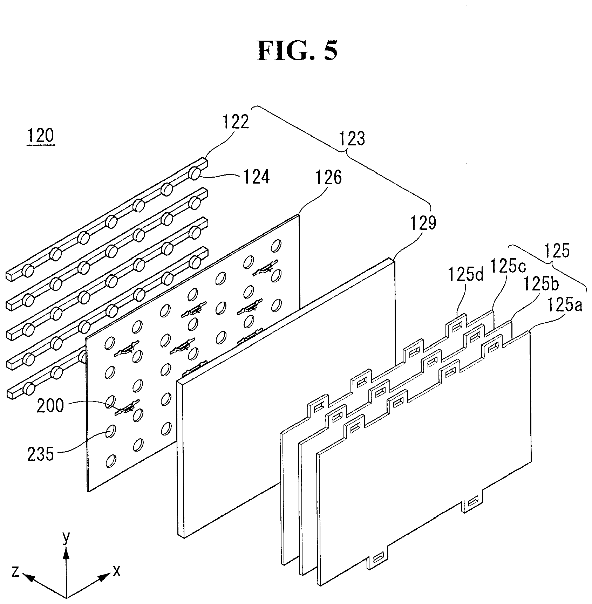

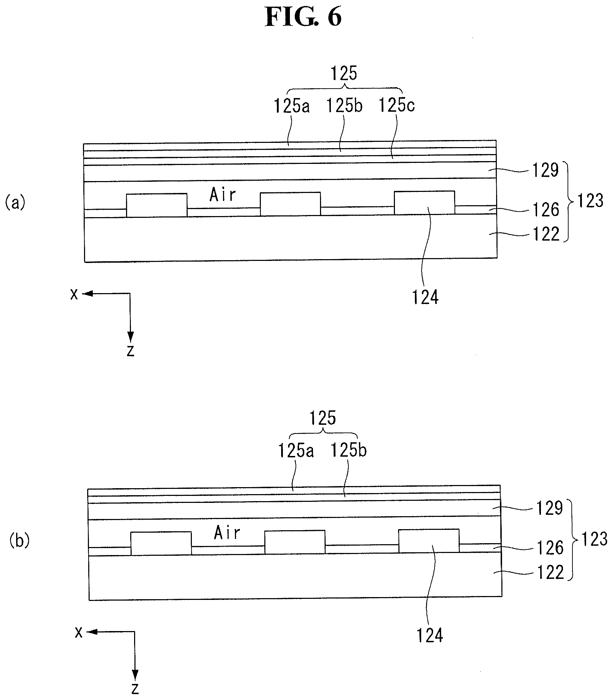

Referring to FIGS. 5 and 6, the backlight unit 120 may include the optical layer 123 including a board 122, at least one optical assembly 124, a reflective sheet 126, and a diffusion plate 129, and the optical sheet 125 positioned on a front side of the optical layer 123.

The board 122 may be configured in the form of a plurality of straps extending in the first direction and spaced apart from one another by a predetermined interval in the second direction.

At least one optical assembly 125 is mounted on the board. The board 122 may have an electrode pattern connecting an adapter and the optical assembly 125. For example, a carbon-nano tube (CNT) electrode pattern connecting the optical assembly 125 and the adapter may be formed on the board 122.

The board 122 may be formed of at least one of polyethyleneterephthalate (PET), polycarbonate (PC), and silicon. The board 122 may be a printed circuit board (PCB) on which at least one optical assembly 124 is mounted.

The optical assemblies 124 may be disposed to be spaced apart from one another by a predetermined interval in the first direction. A diameter of the optical assembly 124 may be greater than that of the board 122. That is, the diameter of the optical assembly 124 may be greater than that of the board 122 in the second direction.

The optical assembly 124 may be a light emitting diode (LED) chip or an LCD package including at least one LED chip.

The optical assembly 124 may be configured as a colored LED or a white LED emitting at least one of red, blue, and green light. The colored LED may include at least one of a red LED, a blue LED, and a green LED.

A light source included in the optical assembly 124 may be a chip-on-board type. The COB type may be a type formed by directly coupling an LED chip, a light source, to the board 122. Thus, a process may be simplified. Also, resistance may be reduced, and thus, energy lost due to heat may be reduced. That is, power efficiency of the optical assembly 124 may be enhanced. The COB type may provide brighter lighting. The COB type may be implemented to be thinner and lighter than the related art.

The reflective sheet 126 may be positioned on the front side of the board 122. The reflective sheet 126 may be positioned on a region excluding a region of the board 122 in which the optical assembly 124 is formed. That is, a plurality of through holes 235 may be formed on the reflective sheet 126.

The reflective sheet 126 may reflect light emitted from the optical assembly 124 forwardly. Also, the reflective sheet 126 may reflect light reflected from the diffusion plate 129.

The reflective sheet 126 may include at least one of a metal and a metal oxide, as reflective materials. For example, the reflective sheet 126 may include a metal having high reflectivity like at least one of aluminum (Al), silver (Ag), gold (Au), and titanium dioxide (TiO₂), and/or a metal oxide.

The reflective sheet 126 may be formed by depositing and/or coating a metal or a metal oxide on the board 122. Ink including a metal may be printed on the reflective sheet 126. The reflective sheet 126 may include a deposition layer formed using a vacuum deposition method such as thermal evaporation, evaporation, or sputtering. The reflective sheet 126 may have a coated layer and/or printed layer formed through printing, gravure coating, or a silk screen method.

An air gap may be positioned between the reflective sheet 126 and the diffusion plate 129. The air gap may serve as a buffer causing light emitted from the optical assembly 126 to be widely spread. In order to maintain the air gap, a supporter 200 may be positioned between the reflective sheet 126 and the diffusion plate 129.

A resin may be deposited on the optical assembly 124 and/or the reflective sheet 126. The resin may serve to spread light emitted from the optical assembly 124.

The diffusion plate 129 may upwardly spread light emitted from the optical assembly 124.

The optical sheet 125 may be positioned on the front side of the diffusion plate 129. A rear surface of the optical sheet 125 may be tightly attached to the diffusion plate 129, and a front surface of the optical sheet 125 may be tightly attached to a rear surface of the display panel 110.

The optical sheet 125 may include one or more sheets. In detail, the optical sheet 125 may include one or more prism sheets and/or one or more diffusion sheets. The plurality of sheets included in the optical sheet 125 may be in a state of being adhered and/or tightly attached.

The optical sheet 125 may include a plurality of sheets having different functions. For example, the optical sheet 125 may include first to third optical sheets 125a to 125c. The first optical sheet 125a may have a function of a diffusion sheet, and the second and third optical sheets 125b and 125c may have a function of a prism sheet. The number and/or positions of the diffusion sheets and the prism sheets may be changed. For example, the optical sheet 125 may include the first optical sheet 125a as a diffusion sheet and the second optical sheet 125b as a prism sheet.

The diffusion sheet may prevent light emitted from the diffusion plate from being partially concentrated to obtain uniform brightness of light. The prism sheet may collect light emitted from the diffusion sheet to cause light to be incident to be perpendicular to the display panel 110.

The coupling portion 125d may be formed at least one of edges of the optical sheet 125. The coupling portion 125d may be formed in at least one of the first to third optical sheets 125a to 125c.

The optical portion 125d may be formed at an edge of a longer side of the optical sheet 125. The coupling portion 125d formed at the first longer side and a coupling portion 125d formed at the second longer side may be asymmetric. For example, the coupling portions 125d of the first longer side and the coupling portions 125d of the second longer side may be different in positions and/or number.

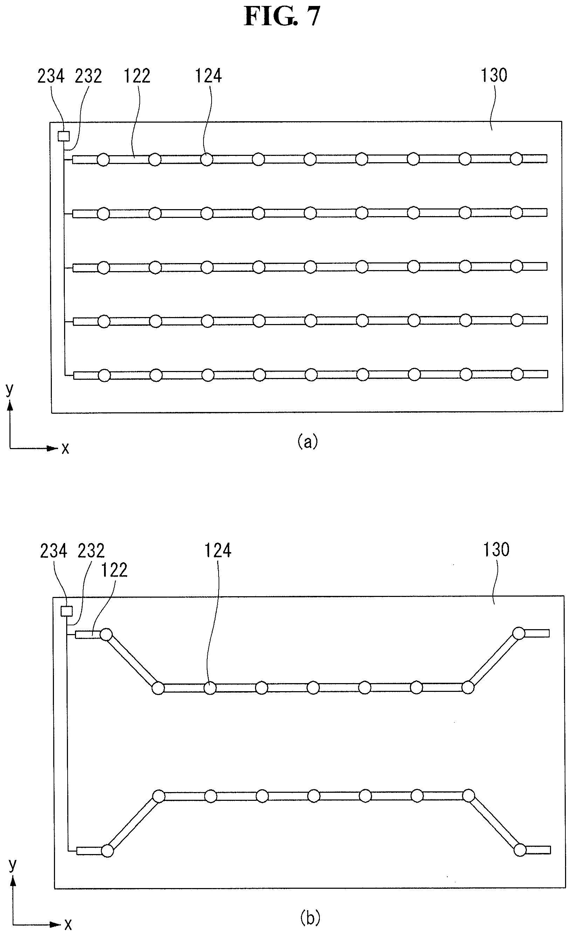

Referring to (a) of FIG. 7, a board 122 including a plurality of straps extending in the first direction on the frame 130 and spaced apart from one another in the second direction perpendicular to the first direction. The plurality of board 122 may be connected to a wiring electrode 232 at one end thereof.

The wiring electrode 232 may extend in the second direction. The wiring electrode 232 may be connected to one ends of the boards 122 at a predetermined interval in the second direction.

A wiring hole 234 may be formed at one end of the wiring electrode 232. The wiring hole 234 may be a fine hole penetrating through the frame 130. The wiring electrode 232 may extend to a rear surface of the frame 130 through the wiring hole 234. The wiring electrode 232 may be electrically connected to an adapter (not shown) positioned on the rear surface of the frame 130 through the wiring hole 234.

Optical assemblies 124 may be mounted on the board 122 at a predetermined interval in the first direction. A diameter of the optical assembly 124 may be greater than a width of the board in the second direction. Thus, an outer region of the optical assembly 124 may go beyond a region in which the board 122 is not provided.

Referring to (b) of FIG. 7, a board 122 including a plurality of straps may extend in a direction other than the first direction from both ends. That is, both ends of the board 122 may extend to corner regions such that the optical assemblies 124 may be positioned in the corner regions.

Since the board 122 on which the optical assembly 124 is mounted is positioned in the corner region, a dark portion of the corner region may be compensated. That is, the entire region of the display device may be uniformly illuminated.

One end of the board 122 positioned in the corner region may be connected to the wiring electrode 232. The wiring electrode 232 may extend in the second direction, and may be electrically connected to an adapter positioned on a rear surface of the frame 130 through the wiring hole 234 formed at one end.

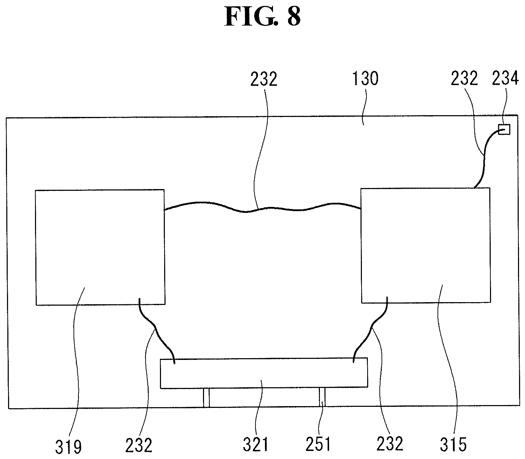

Referring to FIG. 8, the wiring electrode 232 extending from a front surface of the frame 130 through the wiring hole 234 may be connected to one side of a power supply 315. The power supply 315 may be a PCB supplying power to the display device 100. The power supply 315 may change an AC frequency into a DC frequency. That is, the power supply 315 may change a low frequency into a high frequency to increase electrical efficiency,

The power supply 315 may cause the optical assembly 124 positioned on the front surface of the frame 130 to emit light through the wiring electrode 232.

The power supply 315 may be connected to a main board 321 at the other side. The main board 321 may be spaced apart from the power supply 315 by a predetermined interval. For example, the main board 321 and the power supply 315 may be positioned to face each other in the second direction with respect to a central portion of the frame 130.

The main board 321 may be a PCB providing an interface for operating the display device 100. Also, the main board 321 may check and manage an operational state of each of the components of the display device 100.

The main board 321 and the power supply 315 may be connected to a TCON timing controller) board 319 through the wiring electrode 232. The TCON board 319 may be a PCB transmitting a signal input from the main board 321 or the power supply 315 to the display panel 110. The TCON board 319 may be electrically connected to the display panel 110 on a front surface of the frame 130 through a flat flex cable (FFC) 251.

It is illustrated that the PCBs are connected, but the present disclosure is not limited thereto and only some of the PCBs may be connected to each other.

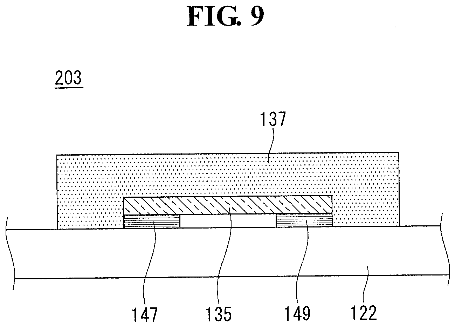

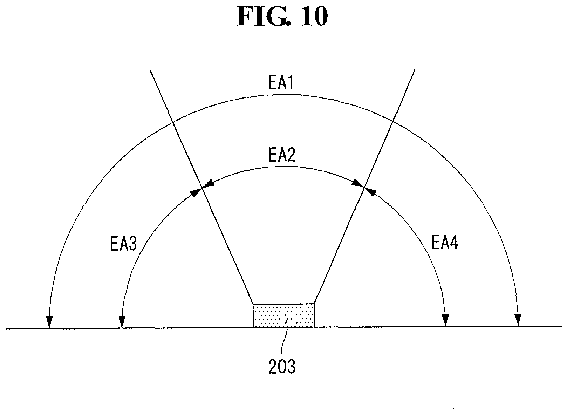

FIGS. 9 and 10 are views illustrating a light source according to an embodiment of the present disclosure.

As illustrated in FIG. 9, a light source 203 may be a COB type. The COB type light source 203 may include at least one of an emission layer 135, first and second electrodes 147 and 149, and a phosphor layer 137.

The emission layer 135 may be positioned on a board 122. The emission layer 135 may emit any one of blue, red, and green light. The emission layer 135 may include any one of Firpic, (CF3ppy)2Ir(pic), 9, 10-di(2-naphthyl)anthracene(AND), Perylene, distyrybiphenyl, PVK, OXD-7, UGH-3(Blue), and any combination thereof.

The first and second electrodes 147 and 149 may be positioned on both sides of a lower surface of the emission layer 135. The first and second electrodes 147 and 149 may transmit an external driving signal to the emission layer 135.

The phosphor layer 137 may cover the emission layer 135 and the first and second electrodes 147 and 149. The phosphor layer 137 may include a phosphor material converting light of a spectrum generated by the emission layer into white light. A thickness of the emission layer 135 may be uniform at an upper side of the phosphor layer 137. The phosphor layer 137 may have a reflective index ranging from 1.4 to 2.0.

The COB type light source 203 according to an embodiment of the present disclosure may be directly mounted on the board 122. Thus, a size of the optical assembly 124 may be reduced.

Since the optical source 203 is positioned on the board 122, having excellent heat dissipation, the light source 203 may be driven with a high current. Thus, the number of light sources 203 required for securing the same amount of light may be reduced.

Since the light source 203 is mounted on the board 122, a wire bonding process may not be required. Thus, the process may be simplified, saving cost.

As illustrated in FIG. 10, the light source 203 according to an embodiment of the present disclosure may emit light within a first emission range EA1. That is, the light source 203 may emit light in an area including a second emission range EA2, a front side, and third and fourth emission ranges EA3 and EA4, the sides. This is different from the related art light source including a POB type which emits light in the second emission range EA2. That is, the light source 203 according to an embodiment of the present disclosure may emit light to have a wide range including the sides of the light source 203.

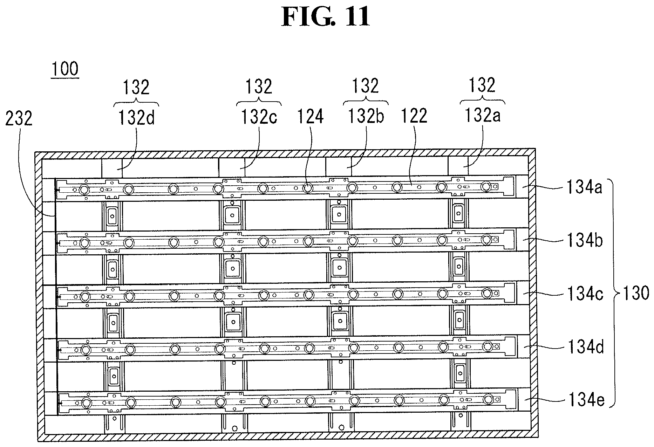

FIGS. 11 through 30 are views illustrating a display device according to an embodiment of the present disclosure.

Referring to FIG. 11, in a display device 100 according to an embodiment of the present disclosure, a main frame 130 is divided into a plurality of frames. For example, the main frame 130 may include first to fifth main frames 134a to 134e. The separate main frames 134 extend in the first direction and may be spaced apart from one another by a predetermined interval in the second direction.

A board 122 extending in the first direction may be provided on the separated main frames 130. The board 122 may be configured as a plurality of straps. A width of the board 122 in the second direction may be smaller than that of the main frame 130 in the second direction in order not to go beyond the main frame 130. A method for coupling the board 122 and the main frame 130 will be described hereinafter.

One end of the board 122 may be connected to a wiring electrode 232. Since the main frames 130 are separated, the wiring electrode 232 may be electrically connected to an adapter (not shown) positioned on a rear surface without a wiring hole.

Since an optical assembly 124, or the like, is mounted on an upper portion of the main frame 130, the main frame 130 may sag to a rear surface. Thus, in order to prevent the main frame 130 from sagging, a plurality of support frames 132 may be provided on the rear surface of the main frame 130 in a direction perpendicular to the first to fifth main frames 134a to 134e. For example, the first to fourth support frames 132a to 132d extend in the second direction and may be spaced apart from one another by a predetermined interval in the first direction.

A plurality of electronic devices may be mounted on a rear surface of the support frames 132. In particular, a larger number of electronic devices may be mounted in a central region of the display device 100. Thus, spaces between the support frames 132 in the central region may be narrower than that of the support frames 132 in an outer area. That is, spaces between the second and third support frames 132b and 132c may be smaller than that between other support frames 132.

In the display device according to an embodiment of the present disclosure, the main frame 130 is divided into a plurality of frames, and the plurality of frames may be spaced apart from one another by a predetermined interval. Thus, the display device 100 may have excellent heat dissipation effect and a less amount of foreign objects such as dust, or the like, may collect therein due to ventilation.

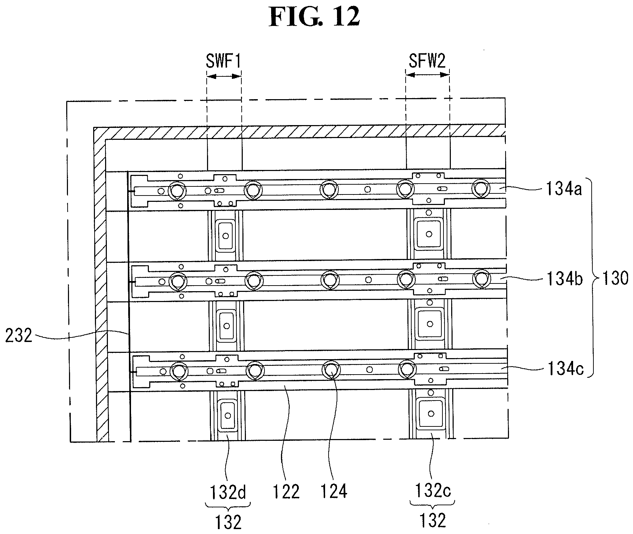

Referring to FIG. 12, a width SWF2 of the support frame 132 positioned in a central region in the first direction may be greater than a width SWF1 of the support frame 132 positioned in the outer region in the first direction. That is, the width SWF2 of the third frame 132c in the first direction may be greater than the width SWF1 of the fourth support frame 132d in the first direction.

As described above, various electronic devices may be coupled to the support frame 132 in the central region. Thus, the support frame 132 in the central region needs to be thicker than other support frames 132 to prevent sagging. In contrast, electronic devices are not coupled to the main frames 134, and thus, widths of the main frames 134 in the second direction may be equal. However, the present disclosure is not limited thereto and widths of the main frames 134 in the second direction may be different.

In the display device 100 according to an embodiment of the present disclosure, the width SWF2 of the support frame 132 positioned in the central region in the first direction may be greater than the width SWF1 of the support frame 132 positioned in the outer region in the first direction. Thus, the support frames 132 may further effectively prevent sagging of the display device 100.

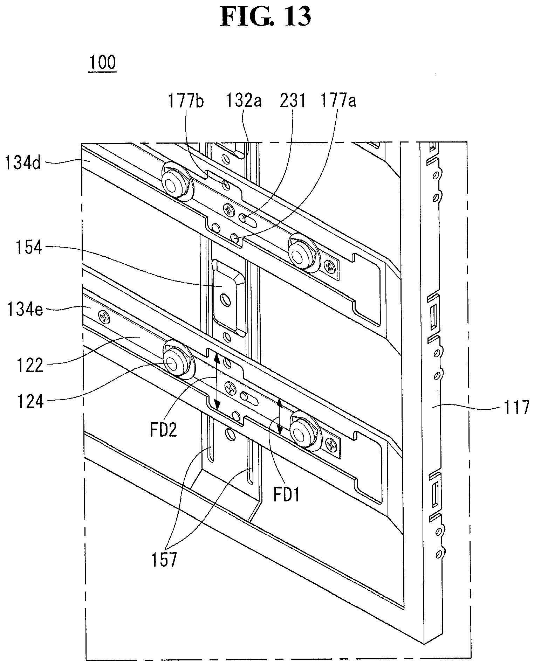

Referring to FIG. 13, in the display device 100 according to an embodiment of the present disclosure, a region of the main frame 130 in which the board 122 is provided is recessed inwardly. The region in which the board 122 is provided may require various protrusions, recesses, or screws in order to couple the board 122 and the main frame 130, and thus, an uneven portion may be formed. When a reflective sheet is provided on the main frame 130, a bright spot or a dark spot may occur due to the uneven portion. Thus, the region in which the board 122 is provided is recessed inwardly such that a reflective sheet may be provided to be flat. In detail, the region in which the board 122 is provided is recessed inwardly in a length direction of the main frame 130.

The main frame 130 and the support frame 132 are coupled to cross each other. A region in which the main frame 130 and the support frame 132 cross each other may accommodate a plurality of holes to be coupled. Thus, a width FD2 of the recessed portion in the region in which the main frame 130 and the support frame 132 cross each other is greater than a width FD1 of a recessed portion in a region in which the main frame 130 and the support frame 132 do not cross each other, in the second direction.

Convex portions 154 may be provided in the region in which the main frame 130 and the support frame 132 do not cross each other. That is, the convex portions 154 may be positioned to be spaced apart from one another on the support frame 132 in the second direction. The front surface may be formed such that a region in which the main frame 130 and the support frame 132 do not cross each other is lower than a region in which the main frame 130 and the support frame 132 cross each other. Thus, when a reflective sheet is provided on the main frame 130, a bright spot or a dark spot may occur due to the uneven portion. Thus, the convex portions 154 may be provided in the region in which the main frame 130 and the support frame 132 do not cross each other, so that the reflective sheet may be provided to be flat.

The main frame 130 and the support frame 132 may be coupled by a first coupling hole 177a and a second coupling hole 177b. In detail, a protruding portion of the support frame 132 may be coupled to the first coupling hole 177a and the second coupling hole 177b may be coupled using a screw or a pin. Since the second coupling hole 177b is fastened after the protruding portion of the support frame 132 is coupled to the first coupling hole 177a, a coupling position may not be misaligned.

In the display device 100 according to an embodiment of the present disclosure, various protrusions and recesses may be provided such that the reflective sheet is provided to be flat on the main frame 130. Thus, when the display device 100 operates, bright spots or dark spots may be reduced.

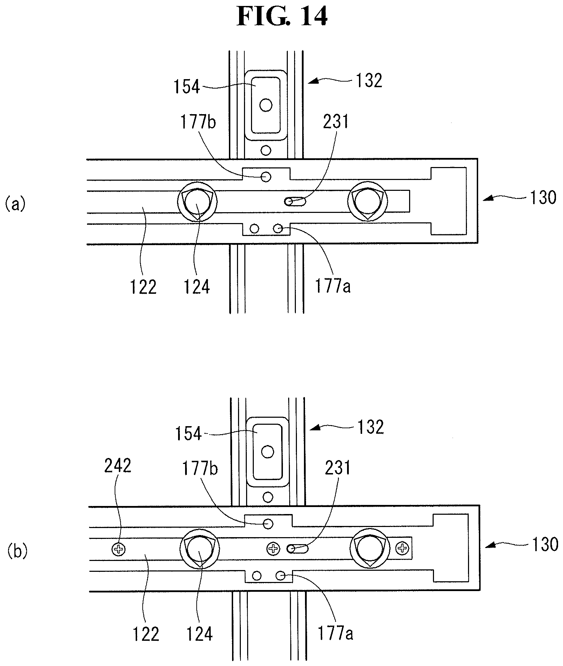

Referring to FIG. 14, in the display device 100 according to an embodiment of the present disclosure, the board 122 and the frame 130 may be firmly coupled through various methods.

For example, as illustrated in (a) of FIG. 14, the board 122 and the main frame 130 may be coupled using a double-sided tape.

At least one hook 231 may be positioned in the inwardly recessed region of the main frame 130. The board 122 and the main frame 130 may be coupled by adjusting a position of the hole of the board 122 to the at least one hook 231 of the main frame 130. The board 122 and the main frame 130 may be conveniently coupled using only the double-sided tape.

Alternatively, as illustrated in (b) of FIG. 14, the board 122 and the main frame 130 may be coupled using at least one screw 242.

As described above, after a position of the hole of the board 122 is adjusted to the at least one hook 231, the board 122 and the main frame 130 may be coupled. In a case in which the board 122 and the main frame 130 are coupled using the screw 242, the board 122 may not be separated from the main frame 130, compared with the case in which the board 122 is coupled to the main frame 130 by a double-sided tape.

Two coupling methods of the board 122 and the main frame 130 have been described, but the present disclosure is not limited thereto and the board 122 and the main frame 130 may be coupled using both a double-sided tape and the screw 242.

In the display device 100 according to an embodiment of the present disclosure, in order to firmly couple the board 122 and the main frame 130, various methods may be used. Thus, a position of the board 122 may not deviate.

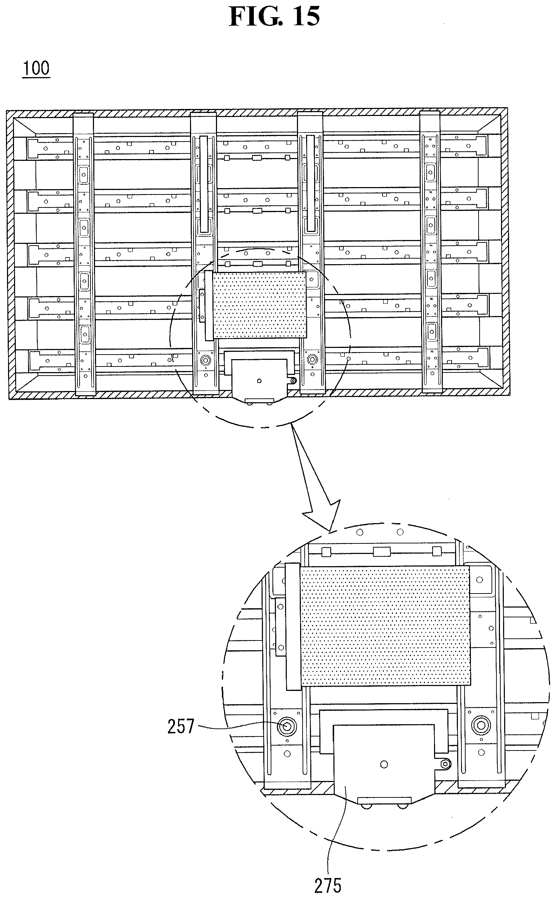

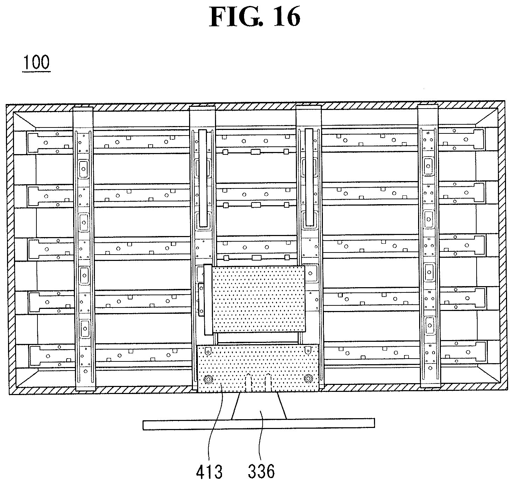

Referring to FIGS. 15 and 16, various devices may be coupled to the rear surface of the support frame 130. For example, a support coupling portion 274 may be coupled to a lower surface of the main frame 130. A plurality of holes may be positioned in the lower surface of the support coupling portion 275, and thus, a support 336 may be coupled thereto. The support 336 may support the entirety of the display device 100. The support 336 is wide and flat in a lower surface thereof having a low center of gravity, and thus, the support 336 may properly support the relatively large display device 100.

The support coupling portion 275 and the support 336 may be shielded by a support cover 413. The support cover 413 may be coupled through a pem nut 257 on the support frame 130 at both sides of the support coupling portion 275.

Since the support 336 is positioned on a lower surface, the display device 100 according to an embodiment of the present disclosure may be easily erected on the bottom. Thus, users may view a screen more conveniently.

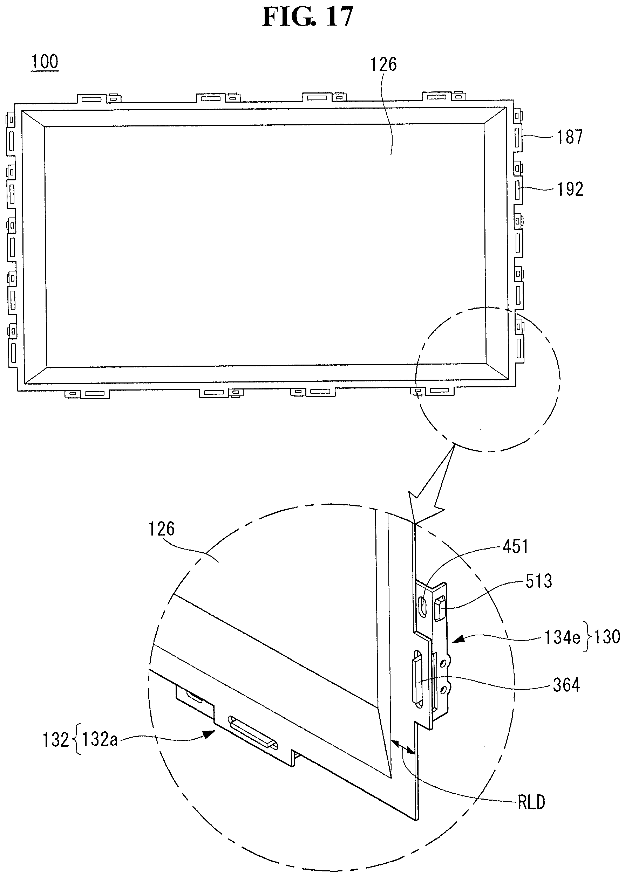

Referring to FIG. 17, in the display device 100 according to an embodiment of the present disclosure, a reflective sheet 126 may cover the main frame 130 and the support frame 132. In detail, a hole 187 may be coupled to a bulge portion 192 of the reflective sheet 126 on first protrusions 364 positioned at both ends of the main frame 130 and the support frame 132.

The reflective sheet 126 may have a chamfered shape in which a corner portion is sloped. Since the reflective sheet 126 has a chamfered shape, the reflective sheet 126 may be spaced apart from another sheet on the upper surface by a predetermined interval. Thus, when light is emitted to an upper surface of the reflective sheet 126, a distance sufficient for light to spread may be secured.

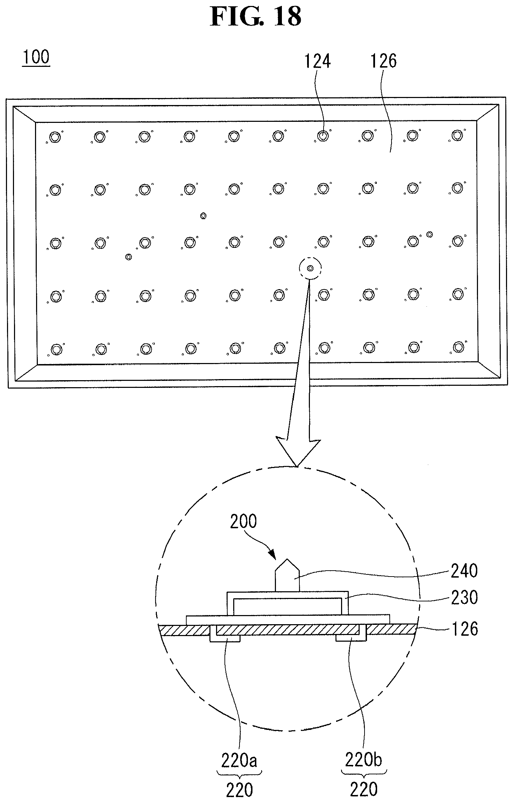

Referring to FIG. 18, a supporter 200 may be positioned on the reflective sheet 126 according to an embodiment of the present disclosure. The supporter 200 may maintain a gap between the reflective sheet 126 and other sheets of the upper surface. The supporter 200 may include first and second coupling protrusions 220a and 220b, an elastic portion 230, and a support portion 240. The supporter 200 may be formed of a soft material such as rubber or silicon. A portion of the supporter 200 may include plastic. For example, a shape of the supporter 200 may be formed of plastic, and a soft material such as rubber, or the like, is applied thereto.

The coupling protrusions 220a and 220b may have a hook shape with one side opened. Opening directions of the first and second coupling protrusions 220a and 220b may be the same. Thus, the supporter 200 may be moved in the Z direction and subsequently moved in the X direction so as to be naturally coupled to the reflective sheet 126.

The elastic portion 230 may be positioned in a portion facing the upper surface of the reflective sheet 126. The elastic portion 230 may have a circular shape. The elastic portion 230 may be deformed to correspond to deformation of other sheet of an upper surface when external force is applied. Thus, damage to the other sheet of the upper surface due to the supporter 200 is prevented.

The support portion 240 may be positioned in a central portion of the elastic portion 230. The support portion 240 may have a shape protruding upwardly. The support portion 240 may be in direct contact with other sheet of the upper surface. The support portion 240 may have a shape narrowed in width in a direction toward an end thereof. The end of the support portion 240 may be lightly in contact with other sheet of the upper surface to support the same. Thus, a space between the other sheet of the upper surface and the reflective sheet 126 may be uniform.

The display device 100 according to an embodiment of the present disclosure may include the supporter 200. Thus, even in a case in which the optical layer is deformed, a possibility in which the optical layer is damaged may be reduced.

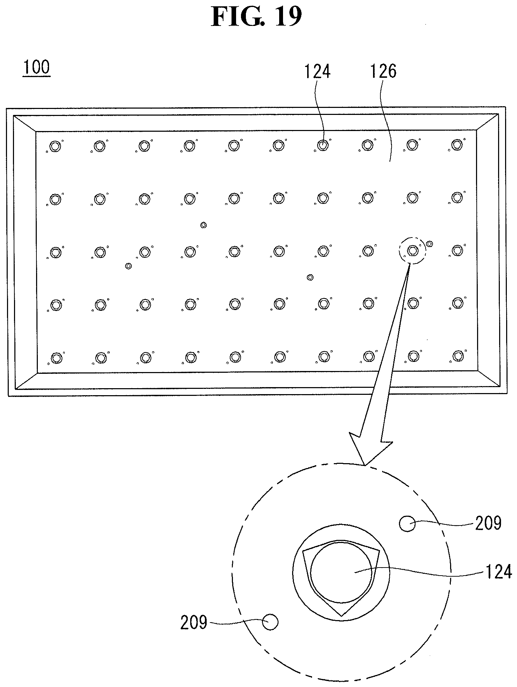

Referring to FIG. 19, in the display device 100 according to an embodiment of the present disclosure, fixing pins 209 may be positioned on both sides of the optical assembly 124. The fixing pins 209 may have a circular shape, and although not shown, a lower surface thereof may protrude to penetrate through the reflective sheet 126.
The fixing pins 209 may fasten the main frame 130 and the reflective sheet 126 though the reflective sheet 126.

The fixing pins 209 may be asymmetric with respect to the optical assembly 124. For example, the fixing pin 209 on the left of the optical assembly 124 may be positioned on a lower side, and the fixing pin 209 on the right of the optical assembly 124 may be positioned on an upper side.

The reflective sheet 126 may be further tightly attached to the main frame 130 by the fixing pins 209. That is, unevenness that occurs as the reflective sheet 126 is loosely coupled may be prevented. If the fixing pins 209 is too large, light may be reflected when the optical assembly 124 emits light to form a bright spot or a dark spot, and thus, the fixing pins 209 may have a small diameter.

The display device 100 according to an embodiment of the present disclosure may include the fixing pins 209. Thus, the reflective sheet 126 and the main frame 130 may be tightly attached to cause light to be evenly reflected.

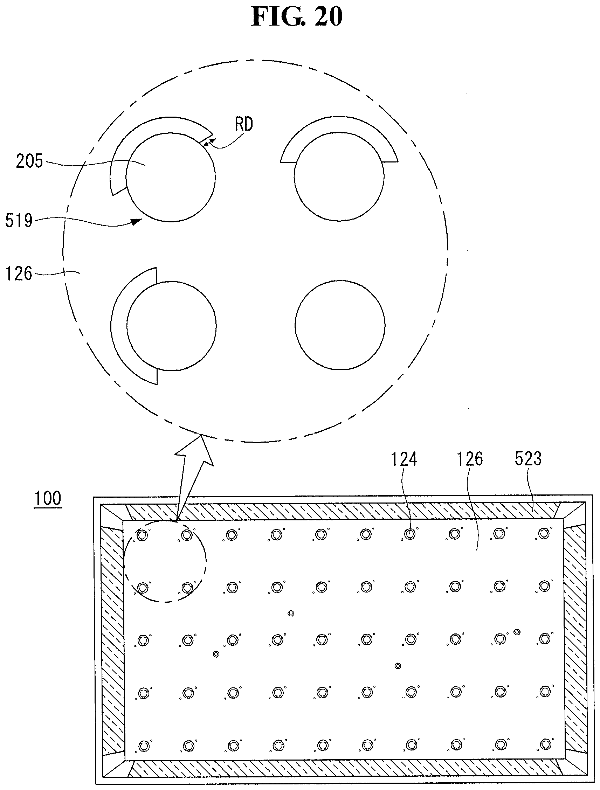

Referring to FIG. 20, in the display device 100 according to an embodiment of the present disclosure, a first pattern 523 may be printed in the chamfered region of the reflective sheet 126. In detail, a plurality of first patterns 523 having different sizes or density according to positions may be printed in the chamfered region of the reflective sheet 126. Sizes or density of the first patterns 523 may vary according to angles of the chamfered region of the reflective sheet 126. For example, as angles are increased from a lower surface of the chamfered region of the reflective sheet 126, sizes or density of the first patterns 523 may be increased.

The first patterns 523 may not be positioned in four vertices of the reflective sheet 126. Light emitted from the optical assembly 124 may be blocked by other optical assembly to form shadow in the vertices. Thus, in order to compensate for dark portions due to the formation of the shadow in the vertices of the reflective sheets 126, the first pattern 523 may not be positioned in the vertices.

A lens hole 519 of the optical assembly 124 in contact with the chamfered region may be different from a lens hole 519 of other optical assembly 124. When the reflective sheet 126 covers, the reflective sheet 126 and the frame may be spaced apart from one another at the portion in which the chamfered region starts. Thus, the reflective sheet 126 and the lens 205 may be close in the portion in which the chamfered region starts. That is, a bright spot may occur in the portion in which the chamfered region starts.

For example, in the lens hole 519 in contact with the chamfered region, a hemisphere of a portion thereof facing the chamfered region may be greater in a diameter by a predetermined interval RD than a hemisphere of the opposite side. Thus, since the diameter of the lens hole 519 in the portion in which the chamfered region starts may be increased to eliminate a bright spot. As illustrated, in the lens hole 519 positioned in the vertex, a diameter of an upper hemisphere in a diagonal line may be greater by a predetermined interval RD than a diameter of the other hemisphere. Also, in the lens hole 519 positioned in upper and lower portion, a diameter of an upper hemisphere may be greater by a predetermined interval RD than a diameter of the other hemisphere. Also, in the lens holes 519 positioned at both ends, diameters of left and right hemispheres may be greater by a predetermined interval RD than a diameter of the other hemisphere.

In the display device 100 according to an embodiment of the present disclosure, diameters of hemispheres of the lens holes 519 may be different. Thus, sizes of the lens holes 519 of the reflective sheet 126 may be adjusted to prevent a bright spot or a dark spot.

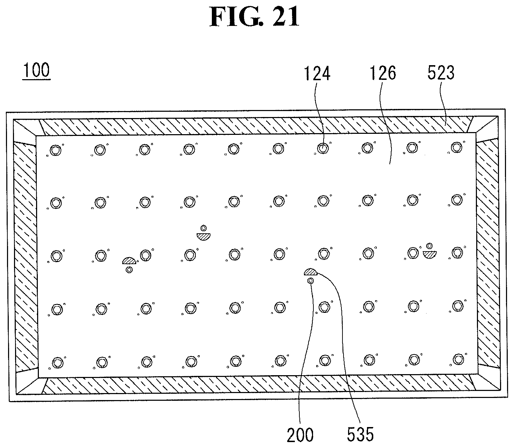

Referring to FIG. 21, in the display device 100 according to an embodiment of the present disclosure, a second pattern 535 may be printed on at least one side of the supporter 200. The supporter 200 protrudes from the reflective sheet 126, so it may reflect at least a partial amount of light. Thus, in the display device 100, a dark spot or a bright spot may occur due to the supporter 200.

For example, the second pattern 535 may be printed to a region in which a large amount of light is reflected by the supporter 200. That is, the second pattern 535 may be printed in a region facing the center of the display device 100. The second pattern 535 may be spaced apart from the supporter 200 by a predetermined interval, and may have a half moon shape.

In the display device 100 according to an embodiment of the present disclosure, the second pattern 535 may be printed in a region near the supporter 200. Thus, light reflection due to the supporter 200 may be prevented to prevent a bright spot or a dark spot in the display device 100.

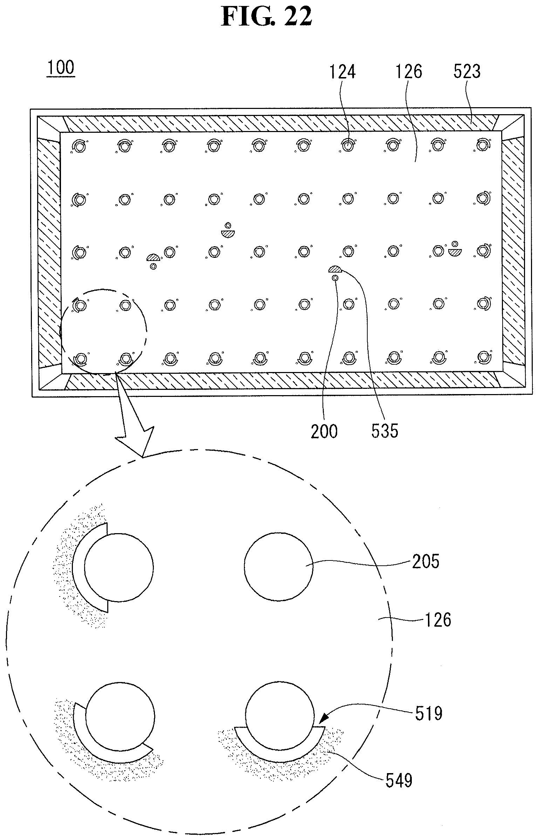

Referring to FIG. 22, in the display device 100 according to an embodiment of the present disclosure, a third pattern 549 may be printed on at least one side of the optical assembly 124 in contact with the chamfered region. When the reflective sheet 126 covers, the reflective sheet 126 and the frame may be spaced apart from one another at the portion in which the chamfered region starts. Thus, the reflective sheet 126 and the lens 205 may be close in the portion in which the chamfered region starts. That is, a bright spot may occur in the portion in which the chamfered region starts.

For example, in the optical assembly 124 in contact with the chamfered region, the third pattern 549 having a fan shape may be printed on the side facing the chamfered region. As a slope of the chamfered region is increased, it may be difficult to adjust reflectivity. Thus, the third pattern 549 having a fan shape may be printed to prevent a bright spot and a dark spot of the display device 100.

In the display device 100 according to an embodiment of the present disclosure, the third pattern 549 may be printed in the vicinity of the chamfered region. Thus, a bright spot and a dark spot of the display device 100 due to separation of the reflective sheet 126 may be prevented.

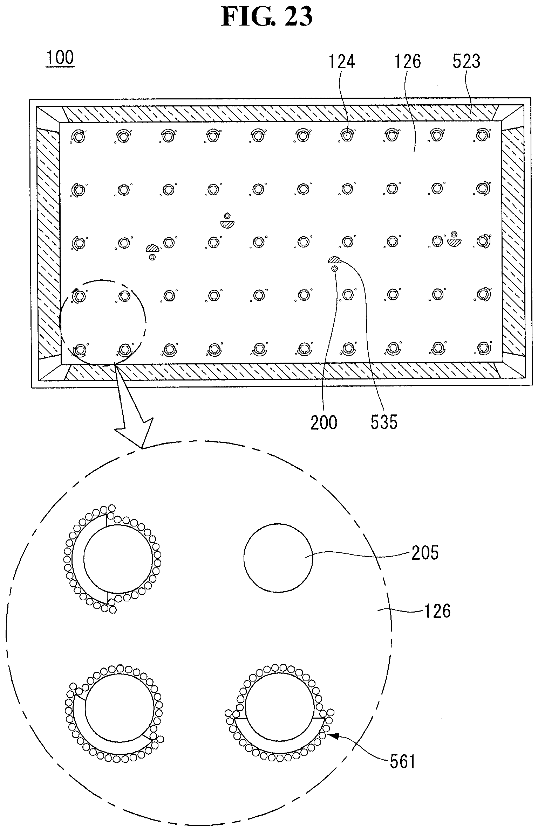

Referring to FIG. 23, in the display device 100 according to an embodiment of the present disclosure, a fourth pattern 561 surrounding the optical assembly 124 in contact with the chamfered region may be printed. When the reflective sheet 126 covers, the reflective sheet 126 and the frame may be spaced apart from one another at the portion in which the chamfered region starts. Thus, the reflective sheet 126 and the lens 205 may be close in the portion in which the chamfered region starts. That is, a bright spot may occur in the portion in which the chamfered region starts.

For example, the fourth pattern 561 may be printed in a region surrounding the optical assembly 124 in contact with the chamfered region. A diameter of at least one printed dot of the fourth pattern 561 may be larger than a diameter of the aforementioned patterns. Since the diameter of the printed dot of the fourth pattern 561 is large, a dark sport or bright sport of the display device 100 may be further effectively prevented. As a slope of the chamfered region is increased, it may be difficult to adjust reflectivity. Thus, the fourth pattern 561 may be printed to prevent a bright spot and a dark spot of the display device 100.

In the display device 100 according to an embodiment of the present disclosure, the fourth pattern 561 may be printed in the vicinity of the chamfered region. Thus, a bright spot and a dark spot of the display device 100 due to separation of the reflective sheet 126 may be prevented.

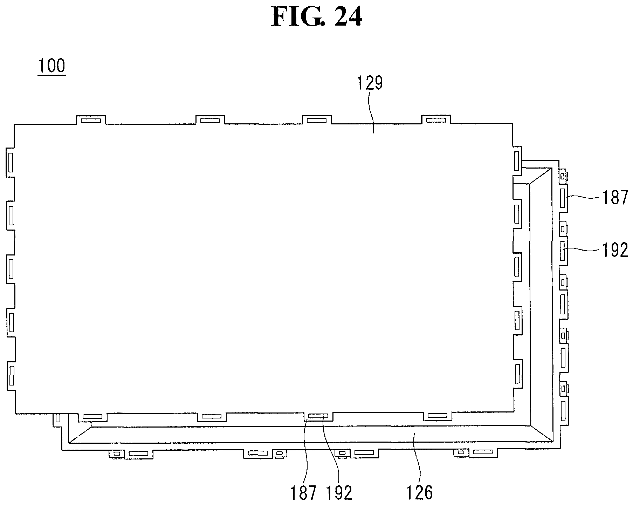

Referring to FIG. 24, in the display device 100 according to an embodiment of the present disclosure, the diffusion plate 129 may cover the reflective sheet 126. In detail, the hole 187 positioned in the bulge portion 192 of the diffusion plate 129 may be coupled to the first protrusion 364.

The diffusion plate 129 may be spaced apart from the reflective sheet 126 by a predetermined interval. Since the supporter on the reflective sheet 126 supports the diffusion plate 129, the diffusion plate 129 may be coupled on the reflective sheet 126 without sagging. Positions of the bulge portion 192 of the diffusion plate 129 and the position of the hole 187 may be the same as positions of the bulge portion 192 of the reflective sheet 126 and the hole 187.

In the display device 100 according to an embodiment of the present disclosure, the diffusion plate 129 may cover the reflective sheet 126. Thus, light may be easily spread to the front surface of the display device 100.

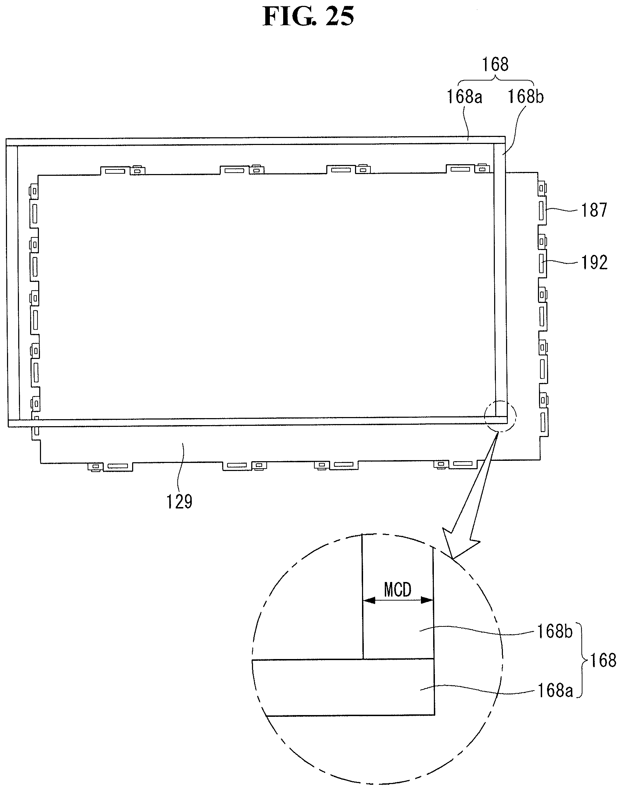

Referring to FIG. 25, a middle cabinet 168 may cover at least a portion of the diffusion plate 129. The middle cabinet 168 may have a frame shape in which a central region is hollow. The middle cabinet 168 may cover an outer circumferential region of the diffusion plate 129. The middle cabinet 168 may be divided into two first cabinets 168a and two second cabinets 168b, for example. When the middle cabinet 168 is divided into four rods, the middle cabinet 168 may be easily installed or separated.

In order to secure a space in which the middle cabinet 168 is to be positioned on the main frame 130 or the support frame 132, a width MCD of the middle cabinet 168 may be smaller than a width RLD of an edge of the main frame 130 or the support frame 132. Thus, the middle cabinet 168 may be stably positioned on the main frame 130 or the support frame 132.

The middle cabinet 168 may fix the reflective sheet 126 and the diffusion plate 129 not to be separated from the main frame 130 or the support frame 132. Also, the middle cabinet 168 may link a portion separated by the main frame 130 and the support frame 132. Thus, the middle cabinet 168 may fix the main frame 130 and the support frame 132 such that they are not released in position.

In the display device 100 according to an embodiment of the present disclosure, the middle cabinet 168 may be positioned in at least a portion of the diffusion plate 129. Thus, the reflective sheet 126 or the diffusion plate 129 may be properly fixed.

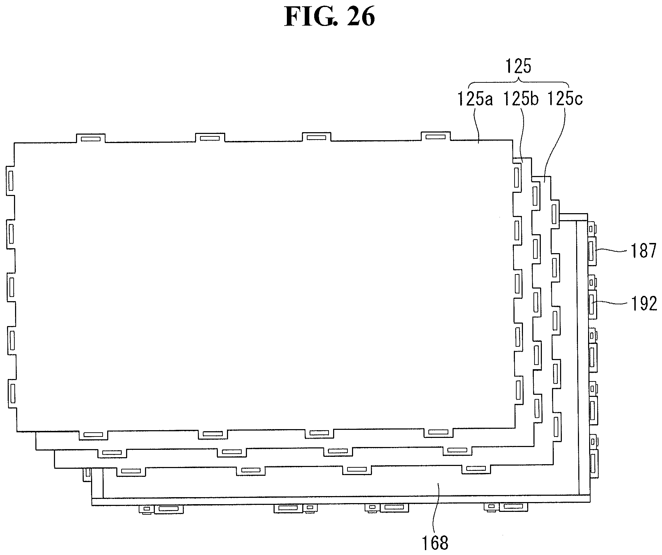

Referring to FIG. 26, in the display device 100 according to an embodiment of the present disclosure, at least one optical sheet 125 may cover the middle cabinet 168. In detail, the hole 187 may be coupled to the bulge portion 192 of the optical sheet 128 on the first protrusion 364.

Since the optical sheet 125 is positioned on the middle cabinet 168, the optical sheet 125 may be easily coupled without being interfered by a space between the main frame 130 or the support frame 132.

In the display device 100 according to an embodiment of the present disclosure, at least one optical sheet 125 may be positioned on the middle cabinet 168. Thus, the optical sheet 126 may be coupled more conveniently than covering the optical sheet 125 directly on the diffusion plate 129.

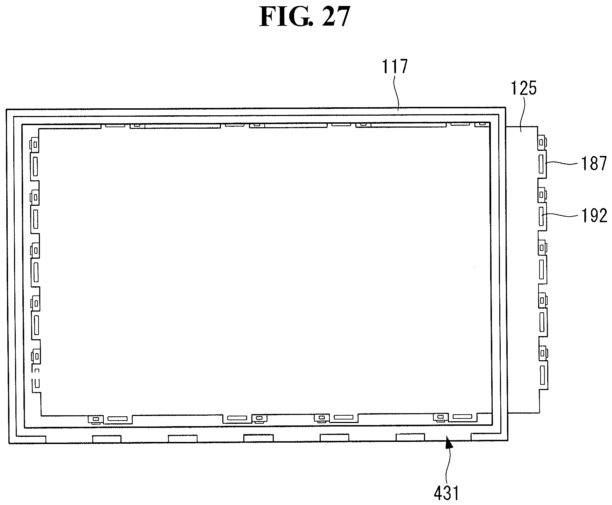

Referring to FIG. 27, in the display device 100 according to an embodiment of the present disclosure, a first guide panel 117 may cover at least a portion of the optical sheet 125. The guide panel 117 may have a frame shape in which a central region is hollow. The first guide panel 117 may cover an outer circumferential region of the optical sheet 125. Also, the first guide panel 117 may cover a side surface of the main frame or the support frame. A specific coupling method of the first guide panel 117 will be described hereinafter.

At least one groove 431 may be positioned at a lower side of the first guide panel 117. A wiring electrode having at least one portion connected to the TICON board may be connected to the display panel through the groove 431. The at least one groove 431 may be positioned to be spaced apart from the lower side of the first guide panel 117 by a predetermined interval. It is illustrated that the at least one groove 431 is positioned at the lower side of the first guide panel 117, the present disclosure is not limited thereto and the at least one groove 431 may be positioned at the other side of the first guide panel 117.

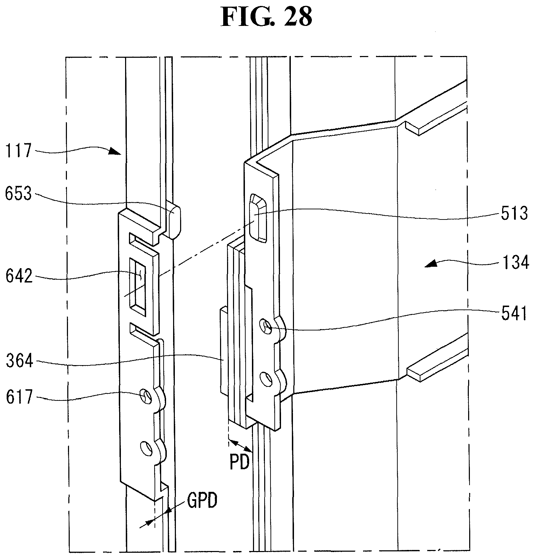

Referring to FIG. 28, a side surface of the first guide panel 117 and the main frame or the support frame 134 may be coupled. In order to accommodate the main frame or the support frame 134 within the first guide panel 117, a coupling portion of the first guide panel 117 may further protrude by a predetermined length GPD, compared other portions. The protruded length GPD of the first guide panel 117 may be equal to or greater than a protruded distance PD of the main frame or the support frame 134.

A second protrusion 513 of the main frame or the support frame 134 and a second recess 642 of the first guide panel 117 may be coupled. Accordingly, a panel coupling hole 541 and a frame coupling hole 617 may be aligned. The panel coupling hole 541 and the frame coupling hole 617 may be fastened through a screw.

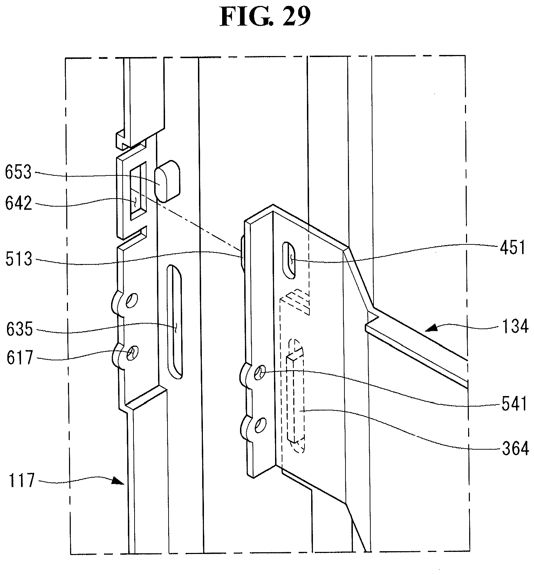

Referring to FIG. 29, a front surface of the first guide panel 117 and the main frame or the support frame 134 may be coupled. A first frame coupling recess 635 of the first guide panel 117 and a first protrusion 364 of the main frame or the support frame 134 may be coupled. The first protrusion 364 may include at least one concavo-convex portion in order to prevent separation of the main frame or the support frame 134 from the first guide panel 117. Also, the third protrusion 653 of the first guide panel 117 and a second frame coupling recess 451 of the main frame or the support frame 134 may be coupled. Here, since the third protrusion 653 is coupled in a portion similar to the second protrusion 513 in a mutually perpendicular direction, the main frame or the support frame 134 and the first guide panel 117 may be prevented from being separated.

In the display device 100 according to an embodiment of the present disclosure, the first guide panel 117 and the main frame or the support frame 134 may be coupled through various coupling structures. Thus, the first guide panel 117 and the frame or the support frame 134 may be prevented from being separated.

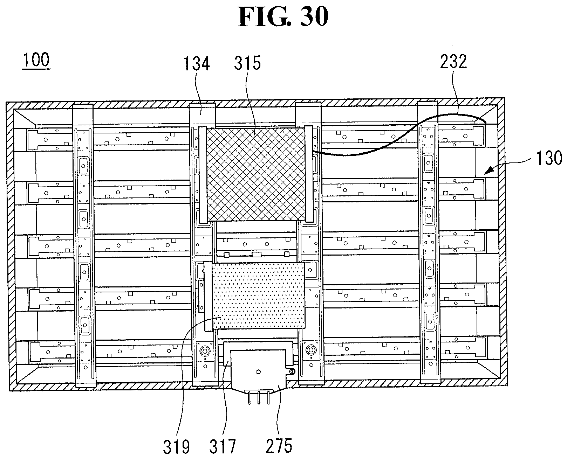

Referring to FIG. 30, in the display device 100 according to an embodiment of the present disclosure, at least one electronic device may be coupled to the support frame 134 positioned in the central region. For example, the TICON board 251, the main board 319, and/or the power supply 315 may be coupled to the support frame 134 provided in the central region above the support coupling portion 275. However, the present disclosure is not limited thereto and the TICON board 251, the main board 319, and/or the power supply 315 may be coupled to the support frame in a peripheral region.

In the display device 100 according to an embodiment of the present disclosure, since the main frame 130 is separated, the optical assembly on the front side of the main frame and the power supply 315 may be electrically connected even without a wiring hole for connecting the wiring electrode 232. Thus, the main frame 130 may be manufactured more simply, and even though the wiring electrode 232 has an error, the wiring electrode 232 may be easily exchanged or repaired.

Although embodiments have been described with reference to a number of illustrative embodiments thereof, it should be understood that numerous other modifications and embodiments can be devised by those skilled in the art that will fall within the scope of the invention as defined in the appended claims and taking into account the principles of this disclosure.

## Claims

1. A display device comprising:
a display panel (110);
a reflective sheet (126) positioned behind the display panel (110);
a frame positioned behind the reflective sheet (126), the frame comprising a plurality of main frames (134) and a plurality of support frames (132);
a board (122) disposed on the frame; and
an optical assembly (124) mounted on the board (122),
wherein the plurality of main frames (134) are disposed in a first direction and the plurality of support frames (132) are disposed in a second direction different from the first direction, and the plurality of main frames (134) and the plurality of support frames (132) are crossed,
**characterized in that**
the main frames (134) include a recess formed in a length direction of the main frames (134), and the width (FD2) of the recess in the second direction in a region crossing one of the support frames (132) is different from the width (FD1) of the recess in the second direction in a region not crossing one of the support frames (132).

2. The display device of claim 1, wherein the plurality of main frames (134) are disposed such that one is parallel to the other.

3. The display device of claim 1 or 2, wherein the support frames (132) satisfy at least one of the following conditions (b) to (c):
(b) they are disposed on a rear surface of the main frames (134); and
(c) each support frame (132) includes a first region crossing at least one main frame and a second region not crossing any main frame,
wherein a convex portion (154) is formed in the second region and protrudes in a forward direction of the display device.

4. The display device of claim 1, wherein the first direction and the second direction are perpendicular to each other.

5. The display device of claim 1, wherein the board (122) is accommodated in the recess.

6. The display device of claim 1, wherein the plurality of support frames (132) include first and fourth support frames (132a, 132d) positioned in an outer region of the display device; and
second and third support frames (132b, 132c) positioned in a central region of the display device.

7. The display device of claim 6, wherein the distance between the second and third support frames (132b, 132c) is smaller than the distance between the first and second support frames (132a, 132b) and the distance between the third and fourth support frames (132c, 132d).

8. The display device of claim 6 or 7, wherein the width (SWF2) of the second and third support frames (132b, 132c) is longer than the width (SWF1) of the first and fourth support frames (132a, 132d) in the second direction.

9. The display device of any one of claims 6 to 8, further comprising:
at least one printed circuit board, PCB, disposed on the second frame (132b) or the third frame (132c),
wherein the at least one PCB is electrically connected to the display panel (110).

10. The display device of claim 1, wherein the board (122) satisfies at least one of the following conditions (d) to (e):
(d) it is divided into a plurality parts, and the plurality of parts of the board (122) are disposed to be spaced apart from one another along one of the main frames (134); and
(e) it is coupled to the main frame (130) using a double-sided tape and/or a screw.

11. The display device of claim 1, further comprising:
a diffusion plate (129) positioned on the reflective sheet (126); and
at least one optical sheet (125) positioned on the diffusion plate (129).

12. The display device of claim 11, wherein the reflective sheet (126) includes at least one printed pattern.

13. The display device of claim 11 or 12, wherein the reflective sheet (126) includes a sloped chamfered corner region.

## Patentansprüche

1. Anzeigevorrichtung, umfassend:
ein Anzeigefeld (110);
eine reflektierende Folie (126), die hinter dem Anzeigefeld (110) positioniert ist;
einen Rahmen, der hinter der reflektierenden Folie (126) positioniert ist, wobei der Rahmen eine Vielzahl von Hauptrahmen (134) und eine Vielzahl von Stützrahmen (132) umfasst;
eine Platte (122), die auf dem Rahmen angeordnet ist; und
eine optische Baugruppe (124), die auf der Platte (122) montiert ist,
wobei die Vielzahl von Hauptrahmen (134) in einer ersten Richtung angeordnet ist und die Vielzahl von Stützrahmen (132) in einer zweiten Richtung angeordnet ist, die sich von der ersten Richtung unterscheidet, und die Vielzahl von Hauptrahmen (134) und die Vielzahl von Stützrahmen (132) gekreuzt sind,
**dadurch gekennzeichnet, dass**
die Hauptrahmen (134) eine Aussparung umfassen, die in einer Längsrichtung der Hauptrahmen (134) ausgebildet ist, und
die Breite (FD2) der Aussparung in der zweiten Richtung in einem Bereich, der einen der Stützrahmen (132) kreuzt, sich von der Breite (FD1) der Aussparung in der zweiten Richtung in einem Bereich, der einen der Stützrahmen (132) nicht kreuzt, unterscheidet.

2. Anzeigevorrichtung nach Anspruch 1, wobei die Vielzahl von Hauptrahmen (134) so angeordnet ist, dass einer parallel zum anderen ist.

3. Anzeigevorrichtung nach Anspruch 1 oder 2, wobei die Stützrahmen (132) mindestens eine der folgenden Bedingungen (b) bis (c) erfüllt:
(b) sie sind auf einer Rückfläche der Hauptrahmen (134) angeordnet; und
(c) jeder Stützrahmen (132) umfasst einen ersten Bereich, der mindestens einen Hauptrahmen kreuzt, und einen zweiten Bereich, der keinen Hauptrahmen kreuzt,
wobei ein konvexer Abschnitt (154) in dem zweiten Bereich ausgebildet ist und in einer Vorwärtsrichtung der Anzeigevorrichtung vorsteht.

4. Anzeigevorrichtung nach Anspruch 1, wobei die erste Richtung und die zweite Richtung senkrecht zueinander stehen.

5. Anzeigevorrichtung nach Anspruch 1, wobei die Platte (122) in der Aussparung aufgenommen ist.

6. Anzeigevorrichtung nach Anspruch 1, wobei die Vielzahl der Stützrahmen (132) einen ersten und vierten Stützrahmen (132a, 132d), die in einem äußeren Bereich der Anzeigevorrichtung positioniert sind und
zweite und dritte Stützrahmen (132b, 132c), die in einem zentralen Bereich der Anzeigevorrichtung positioniert sind, umfasst.

7. Anzeigevorrichtung nach Anspruch 6, wobei der Abstand zwischen dem zweiten und dritten Stützrahmen (132b, 132c) kleiner ist als der Abstand zwischen dem ersten und zweiten Stützrahmen (132a, 132b) und der Abstand zwischen dem dritten und vierten Stützrahmen (132c, 132d).

8. Anzeigevorrichtung nach Anspruch 6 oder 7, wobei die Breite (SWF2) des zweiten und dritten Stützrahmens (132b, 132c) länger ist als die Breite (SWF1) des ersten und vierten Stützrahmens (132a, 132d) in der zweiten Richtung.

9. Anzeigevorrichtung nach einem der Ansprüche 6 bis 8, ferner umfassend:
mindestens eine Leiterplatte, PCB, die auf dem zweiten Rahmen (132b) oder dem dritten Rahmen (132c) angeordnet ist,
wobei die mindestens eine PCB elektrisch mit dem Anzeigefeld (110) verbunden ist.

10. Anzeigevorrichtung nach Anspruch 1, wobei die Platte (122) mindestens eine der folgenden Bedingungen (d) bis (e) erfüllt:
(d) sie ist in eine Vielzahl von Teilen unterteilt, und die Vielzahl von Teilen der Platte (122) sind so angeordnet, dass sie voneinander beabstandet entlang von einem der Hauptrahmen (134) angeordnet sind; und
(e) sie ist mit dem Hauptrahmen (130) unter Verwendung eines doppelseitigen Klebebands und/oder einer Schraube gekoppelt.

11. Anzeigevorrichtung nach Anspruch 1, ferner umfassend:
eine Diffusionsplatte (129), die auf der reflektierenden Folie (126) positioniert ist; und
mindestens eine optische Folie (125), die auf der Diffusionsplatte (129) positioniert ist.

12. Anzeigevorrichtung nach Anspruch 11, wobei die reflektierende Folie (126) mindestens ein gedrucktes Muster umfasst.

13. Anzeigevorrichtung nach Anspruch 11 oder 12, wobei die reflektierende Folie (126) einen geneigten, abgeschrägten Eckbereich umfasst.

## Revendications

1. Dispositif d'affichage comprenant :
un panneau d'affichage (110) ;
une feuille réfléchissante (126) positionnée derrière le panneau d'affichage (110) ;
un cadre positionné derrière la feuille réfléchissante (126), le cadre comprenant une pluralité de cadres principaux (134) et une pluralité de cadres de support (132) ;
un panneau (122) disposé sur le cadre ; et
un ensemble optique (124) monté sur le panneau (122),
les différents cadres principaux (134) étant disposés dans une première direction et les différents cadres de support (132) étant disposés dans une seconde direction différente de la première direction, et les différents cadres principaux (134) et les différents cadres de support (132) étant croisés,
**caractérisé par le fait que**
les cadres principaux (134) comprennent un renfoncement formé dans une direction de longueur des cadres principaux (134), et
la largeur (FD2) du renfoncement dans la seconde direction dans une région croisant l'un des cadres de support (132) est différente de la largeur (FD1) du renfoncement dans la seconde direction dans une région de ne croisant pas l'un des cadres de support (132).

2. Dispositif d'affichage selon la revendication 1, dans lequel les différents cadres principaux (134) sont disposés de telle sorte que l'un est parallèle à l'autre.

3. Dispositif d'affichage selon la revendication 1 ou 2, dans lequel les cadres de support (132) satisfont au moins une des conditions suivantes (b) et (c) :
(b) ils sont disposés sur une surface arrière des cadres principaux (134) ; et
(c) chaque cadre de support (132) comprend une première région croisant au moins un cadre principal et une seconde région ne croisant aucun cadre principal,
une partie convexe (154) étant formée dans la seconde région et faisant saillie dans une direction vers l'avant du dispositif d'affichage.

4. Dispositif d'affichage selon la revendication 1, dans lequel la première direction et la seconde direction sont perpendiculaires l'une à l'autre.

5. Dispositif d'affichage selon la revendication 1, dans lequel le panneau (122) est logé dans le renfoncement.

6. Dispositif d'affichage selon la revendication 1, dans lequel les différents cadres de support (132) comprennent des premier et quatrième cadres de support (132a, 132d) positionnés dans une région externe du dispositif d'affichage ; et
des deuxième et troisième cadres de support (132b, 132c) positionnés dans une région centrale du dispositif d'affichage.

7. Dispositif d'affichage selon la revendication 6, dans lequel la distance entre les deuxième et troisième cadres de support (132b, 132c) est plus petite que la distance entre les premier et deuxième cadres de support (132a, 132b) et la distance entre les troisième et quatrième cadres de support (132c, 132d).

8. Dispositif d'affichage selon la revendication 6 ou 7, dans lequel la largeur (SWF2) des deuxième et troisième cadres de support (132b, 132c) est plus longue que la largeur (SWF1) des premier et quatrième cadres de support (132a, 132d) dans la seconde direction.

9. Dispositif d'affichage selon l'une quelconque des revendications 6 à 8, comprenant en outre :
au moins une carte de circuits imprimés, PCB, disposée sur le deuxième cadre (132b) ou le troisième cadre (132c),
l'au moins une PCB étant reliée électriquement au panneau d'affichage (110).

10. Dispositif d'affichage selon la revendication 1, dans lequel le panneau (112) satisfait au moins une des conditions suivantes (d) et (e) :
(d) elle est divisée en une pluralité de parties, et les différentes parties du panneau (122) sont disposées de façon à être espacées les unes des autres le long de l'un des cadres principaux (134) ; et
(e) elle est couplée au cadre principal (130) à l'aide d'un ruban adhésif double-face et/ou d'une vis.

11. Dispositif d'affichage selon la revendication 1, comprenant en outre :
une plaque de diffusion (129) positionnée sur la feuille réfléchissante (126) ; et
au moins une feuille optique (125) positionnée sur la plaque de diffusion (129).

12. Dispositif d'affichage selon la revendication 11, dans lequel la feuille réfléchissante (126) comprend au moins un motif imprimé.

13. Dispositif d'affichage selon la revendication 11 ou 12, dans lequel la feuille réfléchissante (126) comprend une région de coin chanfreinée inclinée.
